# EUROPEAN PATENT SPECIFICATION

(11) **EP 3 426 024 B1**
(45) Date of publication and mention of the grant of the patent: **23.09.2020**
(21) Application number: 17710171.4
(22) Date of filing: 07.03.2017
(51) Int. Cl.: A01K 61/60

(54) **SEMI-SUBMERSIBLE FISH FARMING SYSTEM**
ÜBERFLUTBARES SYSTEM ZUR FISCHZUCHT
SYSTÈME D'ÉLEVAGE PISCICOLE SEMI-SUBMERSIBLE

(30) Priority: 07.03.2016 NO 20160387
(43) Date of publication of application: 16.01.2019
(73) Proprietor: Aker Solutions AS, 1325 Lysaker (NO)
(72) Inventor: JAKOBSEN, Kristoffer Kjellså, 0372 Oslo (NO); BRUUN, Per Kristian, 0464 Oslo (NO); ERSDAL, Svein, 0469 Oslo (NO); ALMELAND, Inge Bertin, 1166 Oslo (NO)
(74) Representative: Protector IP AS
(86) International application number: PCT/EP2017/055340
(87) International publication number: WO 2017/153417

(56) References cited:
- EP-A1- 0 612 210
- EP-A2- 0 146 518
- GB-A- 2 227 634
- GB-A- 2 302 525

## Description

### FIELD OF INVENTION

Present invention relates to a semi-submersible fish farming system , comprising: a ring-shaped or polygonal lower buoyancy member, a ring-shaped or polygonal upper buoyancy member and a plurality of columns connecting the buoyancy members, and a net cage connected to the lower buoyancy member, and a net roof closing off the top of the net cage.

### BACKGROUND OF THE INVENTION AND PRIOR ART

There are known numerous types of fish pens for fish farming. The best-known and most widely used technology, especially for farming salmon, is to have a fish pen suspended from a buoyancy ring floating on the surface of the sea. This kind of fish farms is usually designed and dimensioned for sheltered areas with a maximum significant wave height of about 4.5 meters. These fish farms are most often using so called frame mooring, which is an artificial sea bottom which are moored and kept floating by means of buoys. The fish pens are moored to the frame mooring.

Due to the continuous increasing demand for sea food and the limited number sheltered locations suitable for fish farming, there is a need to develop new solutions that can be used outside these sheltered areas, where the environmental influences are much more severe.

In addition, these solutions are prone to environmental influence such as sea lice, algae and jellyfish, which can be potentially harmful for the fish in the fish pen. Another problem with this type of aquaculture devices is that the buoyancy rings are most often produced of a non-stiff, flexible material that will flex and bend when exposed to dynamic loads such as waves and current. Such bending and flexing can cause wear and tear on the fish pen and in severe conditions, the waves can pass over the buoyancy ring and press it down, so the fish inside the fish pen can escape.

In order to avoid exposure to such organisms, there are known several solutions for preventing such organisms to enter into the fish pen.

Since most of these potentially harmful organisms are present only in the upper 5-10 meters of the water column, one solution has been to suspend a 5-10 meter fine-meshed, fluid permeable material outside the fish pen. Since these potentially harmful organisms, especially sea lice, only are present in short periods of the year, these fine-meshed material is usually removed when the presence of these organisms no longer pose a problem. One problem with this solution is that the fine-meshed material over time will be clogged by microorganisms that will grow on the material and the flow through of seawater will be greatly reduced. The consequence of this is that the fish in the fish pen receive insufficient oxygen from the water, which in turn can affect the fish health and the growth rate. Consequently, this solution can only be used for limited periods of time, unless additional oxygen is supplied to the fish pen. However, supply of oxygen is expensive and can therefore only be used in special circumstances.

WO2013117773 (Calanus AS) describes a device for isolating farm cages for fish against undesirable organisms, which device is arranged enclosing the farm cage, where the device comprises a fine-meshed, fluid-permeable net which is open upwardly and downwardly when arranged around the farm cage, where the fluid permeable net will extend a distance down in the farm cage's depth direction, in order thereby to form a skirt around the farm cage. This document claims that the net has a sufficient permeability to provide the fish with enough oxygen under prevailing conditions.

Another solution to this problem is to submerge the fish pen so that the top of the fish pen is situated 5-10 meters below the sea surface. There are known several different solutions to obtain this.

Another solution is to use closed fish pens and pump water from the deep, so called "upwelling". However, this is a costly solution due to the need for pumping large volumes of water.

Yet another solution is to use closed tanks on land and pump seawater from the deep. However, due the demand for oxygen and thereby the volume of water that needs to be pumped, this solutions are most commonly used for breeding hatching, where the oxygen demand is much lower than for larger fish.

Another problem with the known solutions, where the sea pen is floating near the water surface, is that the fish pens are not protected against sea ice. The solution to this problem is to tow the fish pens to waters without ice. However, this can pose yet another potential problem with escape of fish from the fish pen.

GB 2 302 525 A (Subsea Shellfish Ltd.) describes a submersible fish-farming platform comprising a frame having one or more chambers of adjustable buoyancy and means for retaining fish stocking means therebelow.

GB 2 227 634 A (Lithgows Ltd.) describes a fish cage formed from an upper square member above the water line and a lower buoyant square member of smaller size than the first member and is connected thereto by an upstanding leg at each corresponding corner.

WO 2015/153405 (Newell) describes a submersible raft device that is primarily used for aquaculture farming. The raft device has a surface, a buoyance support structure, and a submersion control system. The buoyancy support structure and the submersion control system allow the raft to be submerged to a desired depth beneath the ocean surface. When used for certain kinds of aquaculture farming, such as mussel farming, submerging the raft below the surface protects the raft as well as the mussels growing on ropes suspended from the raft, from damage in times of hazardous sea conditions.

WO 2015/099540 (Ocean Farming AS) describes a semisubmersible, cylindrical net cage including two closable fixed bulkheads and a sliding bulkhead extending in a radial direction from a central column to a circumference, the sliding bulkhead rotatable about the central column. A bottom that can be elevated is provided between the two closable fixed bulkheads. Also claimed is a closable bulkhead for a net cage, as well as a bottom for the net cage that can be elevated.

Also WO2015055867 and EP 0347489 describe semi-submersible fish-farming systems that can tolerate harsh weather conditions.

WO2012/132983 (The University of Tokyo) describes a sink-float structure which can be located at every possible water depth. The document mentions use of the structure for fish pens among other areas of application.

WO 9203921 describes a submersible cage for culturing aquatic animals in harsh environmental conditions. The system can be provided with an air dome when culturing fish that require free air when the cage is submerged.

EP 2 230 895 (Stuart Bussell) describes an aquatic algae cultivation system where one embodiment of the system is submersible in order to provide some protection against violent surface conditions, and the system further comprises a submersion system for lowering the cultivation system below the surface of the body of water and which permits subsequent resurfacing of the system. There are known several solutions with submersible fish pens. Some of these are:
- Atlantis Subsea Farming AS (http://ilaks.no/soker-seks-utviklingskonsesjoner-for-nedsenkbare-merder/)
- Gigante Offshore AS (http://ilaks.no/gigante-ruller-ut-nytt-konsept/)
- Buoy stabilized Oceanis (https://www.linkedin.com/pulse/offshore-aquaculture-submersible-hdpe-cages-oceanis-1-ciattaglia)
- Aqualine submersible fish pen (http://aqualine.no/produkter/aqualine-subsea-system)

This are all systems with a submersible fish pen, which is kept in position below the water surface by means of weights and buoys. Some disadvantages with this solution is damage of the buoys, subsea connections to fish pen, access to the fish pen in submerged position, robustness for ballasting/deballasting, and exposure to sea lice in surface position. An additional disadvantage is the unfavorable transmittal of loads to the fish pen from the flexible floating collar.
- Aqua Culture Fish Farming Technology (Aquatech) http://www.aquaculture-com.net/AquaTech.htm#Projekte
- Farmocean AB (http://www.farmocean.se/bro1.htm), and
- Storm Havbruk AS (http://www.tu.no/nettarkiv/2001/08/02/testpilot-i-stal)
have developed submersible fish pens which are surrounded by stiff steel constructions. Problems with such solutions are that they are prone to lice when the fish pen is in a surface positions, vulnerable to damage of the buoys, subsea connections to fish pen, access to fish pen in submerged position, subsea connections to the fish pen, and robustness for ballasting/deballasting.

CN 1415193 A discloses a sinking-floating type netted box that has a float frame composes of upper and lower hollow ring tubes, which are made up of several arc tubes through serial connection. The upper and lower ring tubes are linked together by three-ways and vertical tubes between two three-ways. Each ring tube has air inlet and outlet tubes, water inlet and outlet tubes and valves. The netted box can float on the water surface or sink in the water. The fish pen is connected to the upper ring and has a cover. Since the fish pen is connected to the upper buoyant member, the fish-farming system is prone to lice and algae when floating.

### SUMMARY OF THE INVENTION

Present invention relates to a fish farming installation with a semi-submergible floating collar for a submersible fish pen. This installation can operate on two or more water depths such that the top of the net cage can be in a surface positon or completely submerged. The top of the net cage can typically be submerged to a depth of 5-10 meters below the water surface, in order to reduce the exposure to sea lice, algae, and jellyfish and also reduce the environmental loads from ocean currents and waves. Deeper submergence can also be considered to further reduce environmental loads. Since the net cage is submerged, there are less chances for collisions with ships, propellers or floating objects/debris, which in turn reduces the chances for escape of fish.

Other advantages with the fish farming system according to the invention is the favorable ratio between water line area end displacement, effective construction to handling bending moments from waves and ocean currents, less movement of the floating collar during bad weather conditions, Since the effect of the waves is less in deeper water, less movement will be transferred from the floating collar to the net cage, which in turn reduces the change of destruction of the net cage and escape of fish. Another advantage with this system is the possibility for direct access to the inside of the fish pen from the surface.

These and other advantages can be obtained with
a semi-submersible fish-farming system, such as a fish pen, which can be located in at least two different semi-submerged positions, a first position and a second position, by ballasting and de-ballasting, the system comprises a floating collar comprising a ring-shaped or polygonal lower buoyancy member, a ring-shaped or polygonal upper buoyancy member, a plurality of columns connecting the ring shaped or polygonal members together, said system further comprises a net cage suspended from the lower buoyancy member or the columns, said lower buoyancy member is a continuous, closed pontoon encircling the center of the fish pen, said net cage comprises a fish repellent closing net and a fish repellent net roof, said net roof closing off the top of the net cage, and that said upper member being buoyant,
said system is further movable towards the first position by moving water out of the lower buoyancy member to bring said lower buoyancy member to the water surface, where the lower buoyant member is floating on the water surface so that the net roof is above the water surface and where the columns and the upper buoyancy member is located above the water surface; and towards the second position, by moving water into the interior of the lower buoyancy member and/or into at least a parts of the columns, where the lower buoyancy member and all the major parts or all the extension of the columns are submerged below the water surface until the water line is at the upper part of the columns or until the upper buoyancy member is floating on the water surface, where the fish repellent net roof is kept at a certain depth to avoid or reducing the exposure to sea lice, jellyfish an algae, and reducing the environmental loads from ocean currents and waves.

Further advantageous embodiments and features of the system according to the invention are defined in the dependent claims.

### BRIEF DESCRIPTION OF THE DRAWINGS

The invention will now be explained in more detail with reference to several preferred embodiments and the accompanying drawings, where
Fig 1 is a perspective drawing showing the main elements of the fish farming system according to present invention;
Fig. 2 shows a cross-section of the fish farming system in fig. 1,
Fig. 3 shows a detail of the attachment of the fish repellant net and the roof net to the lower buoyancy member,
Fig. 4 is a cross-section showing the upper and lower buoyancy members and a column with tubes and hoses.
Figs. 5 -13 show different alternative embodiments of the inventive concept.
Fig. 14 is a principle representation of the net cage.
Figs. 15-18 show different embodiments of the bottom ring of the net cage.

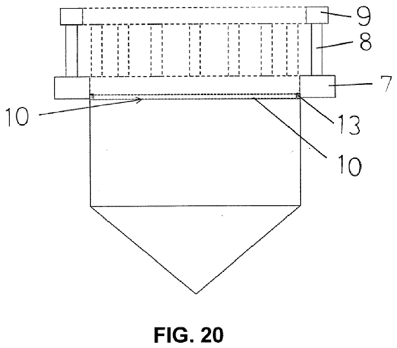

Figs. 19 - 20 is illustrating an embodiment of the suspension of the net cage to the lower buoyancy member.
Figs. 21 A-D illustrates an embodiment of the method of suspending the net cage (3) to the lower buoyancy member.
Figs. 22 - 28 show schematically a method for installing the net cage to the floating collar.
Fig. 29 shows an embodiment where the net cage has a double net configuration.
Fig. 30A-D show different alternatives for placement of the fish repellant roof.

### DETAILED DESCRIPTION

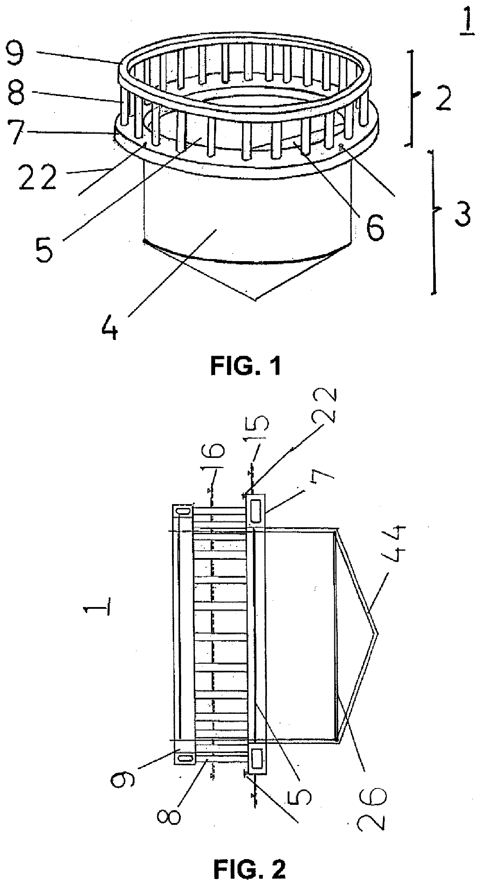

Fig. 1 is a principle drawing showing the main elements of the fish farming system according to the invention and fig. 2 is a cross-section of the system shown in fig. 1. In one preferred embodiment of the system, the system comprises a fish pen (1) with a floating collar (2) comprising a lower buoyancy member (7), an upper buoyancy member (9) and a plurality of columns (8) which are mounted to the lower buoyancy member. The columns (8) connects the lower and upper buoyancy members (7, 9). The upper and lower buoyancy members (7, 8) and columns (8) are preferably made of a rigid material, such as steel. For additional stiffness - torsion, bending, shear - tie struts or plates may be placed between some of the columns. The upper and/or the lower buoyancy members (7, 9) can have a circular or polygonal shape.

The lower buoyancy member (7) is a continuous, closed pontoon encircling the center of the fish pen (1) from which a net cage (3) is suspended. The fish repellant net cage (3) can be a flexible, such as a net or a stiff construction. Further, the net cage can have a fish repellant roof (5). The function of this fish repellant roof (5) will be explained later. The lower buoyancy member (7) can have a circular, square, hexagonal, octagonal etc. design. The cross-section of the lower buoyancy member can for instance be circular, square or any other form. The interior of the lower buoyancy member (7) can be divided into one or more sections by means of partition walls. Further, the cross-section area and shape of the lower buoyancy member (7) does not need to be uniform, but can vary.

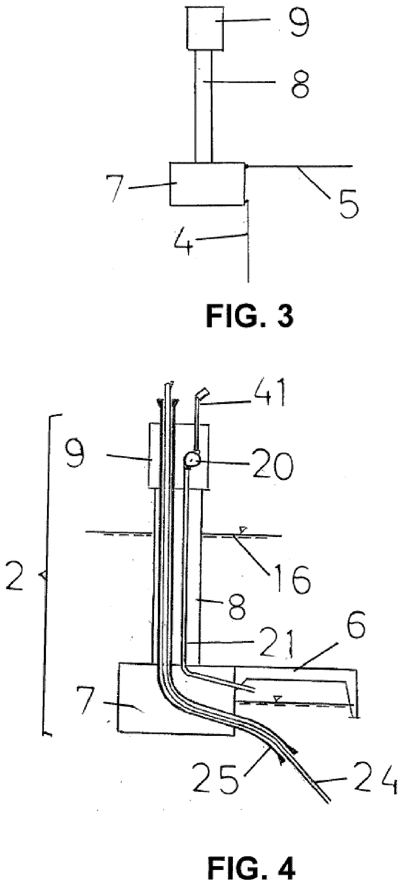

In embodiments comprising columns (8), the cross-section of the columns can be circular, square or any other shape. Further, the columns (8) can be identical or have different size and cross-section. The distance between the columns (8) can be uniform or varying. The distance from a column (8) to the center of the fish pen (1) can also be uniform or varying. The interior of at least some of the columns (8) are preferably in fluid communication with the interior of the lower buoyancy member (7). For trimming, water is supplied or removed from the interior of the lower buoyancy member (7) and possible also the interior of some or all the columns (8). To lower the fish pen (1) to an operational or submerged position (16), water is pumped into the interior of the lower buoyancy member (7) and possibly also into whole or parts of some or all of the columns (8), until the water line is at the upper part of the columns (8) or until the upper buoyancy member (9) is floating on the water surface. The interior of the upper buoyancy member (9) can be closed and filled with air or a foam material that provides buoyancy when the fish pen (1) is submerged. In order to raise the fish pen to a service position (15), the water is pumped out of the lower buoyancy member (7) to bring this member to the water surface. The upper buoyancy member (9) can function as support for travelling cranes, winches, personnel basket to facilitate operations in net cage (3). All necessary tubes, hoses, cables etc. can be connected to the upper buoyancy member (9), led down the columns (8) to the lower buoyancy member (7) and out into the net cage (3). Consequently, there is no need to take the net cage (3) to surface for inspection or connection and the operation is not relying on divers/ROV. This shown schematically in Fig. 4.

In the service position (15), the floating collar (2) is floating with the lower buoyancy member (7) on the water surface such that the fish repellant roof (5) can be above the water surface. Removing the fish repellant roof (5) when the floating collar (2) is in service position (15), the access to the fish cage is easy for inspection, maintenance and different operations such as crowding and delousing.

In the operational position (16), the lower buoyancy member (7) and all or parts of the columns (8) are submerged and only the upper buoyancy member (9) is in the water line. In this position, the fish repellant roof (5) is kept at a certain depth to avoid or reduce the exposure to sea lice, jellyfish and alga. By submerging the net cage (3), also the environmental impact of waves and currents is reduced, since these impacts in general are more pronounced at the water surface and are reduced with increasing depth. Critical for the net cage (3) will be movements from the floating collar (2) which is transmitted to the net cage (3). By submerging the net cage (3) a distance below the water surface, the movements transferred to the net cage (3) is reduced and the risk for damaging the fish cage and escape of fish is greatly reduced, due to less movement of the floating collar (2) and consequently less movement of the net cage (3). Also direct environmental loads of the net is reduced by submergence

The net cage (3) comprises a fish repellant closing net (4) and a fish repellant roof (5). The fish repellant roof (5) can be of a closed material with little or no permeability or the roof (5) can be of a grid or net. In the following, this element is phrased a "net", but this phrase does not preclude other types of materials. The nets (4, 5) can be separate elements or an integrated construction. If the nets (4, 5) are separate elements, the inner surface of the lower buoyancy member (7) can be the fish repellant element between the closing net (4) and roof net (5).

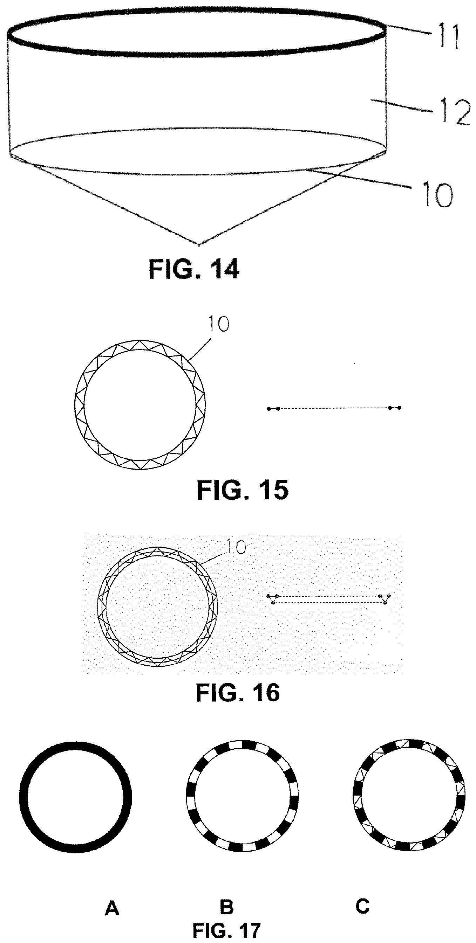

Fig. 14 shows an embodiment of a net cage (3) comprising a top ring (11) a bottom ring (10) and a cylindrical part (12). The circumference of the cylindrical part (12) of the net cage (3) can be mounted to a continuous top ring (11). The top ring (11) can be flexible or stiff and be made of a material that can stand contact with steel and transfer the load from the net cage (3) to the lower buoyancy member (7). Preferably the top ring (11) can be made of steel or a reinforced plastic ring. The net material can be sewn or attached in other ways to the top ring (11) during assembly of the net cage (3).

Figs. 15 - 18 show different embodiments of the bottom ring (10). The purpose of the bottom ring (10) is to weigh down the net cage (3), maintain the shape of the net cage (3) during environmental strains (ensure parallelogram movements of the net cage) and counteract loss of the volume of the net cage (3). If a double barrier net is used, the bottom ring (10) will also act as a spacer between the inner and outer net.

Fig. 15 shows an embodiment of a bottom ring (10) seen from above (left) and in cross-section (right) with a truss work design.

Fig. 16 shows a 3-D design for increase strength and stiffness seen from above (left) and in cross-section (right) with a truss work design.

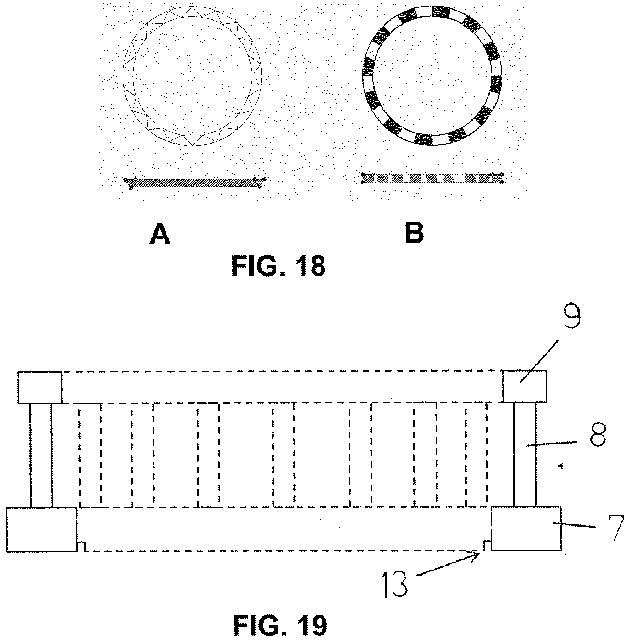

Figs. 17 A-C and 18 A-B shows different embodiments of a bottom ring (10) with different designs in order to increase vertical and horizontal hydrodynamic drag, hydrodynamic lift and hydrodynamic added mass.

Figs. 17 A-C show a compact ring (17A), a partly compact ring (17B) which will increase drag, lift and added mass in the vertical plane. Panels contributing to the hydrodynamic added mass can be self-supporting or act as a contribution to the overall strengthening construction (17C).

Fig. 18 A-B show yet other embodiments of the bottom ring (10). Vertical panels on the bottom ring (10) will increase horizontal hydrodynamic drag, lift and added mass. Fig. 18A shows a compact, vertical panel and Fig. 18B shows partly open vertical panels, possibly in combination with horizontal panels.

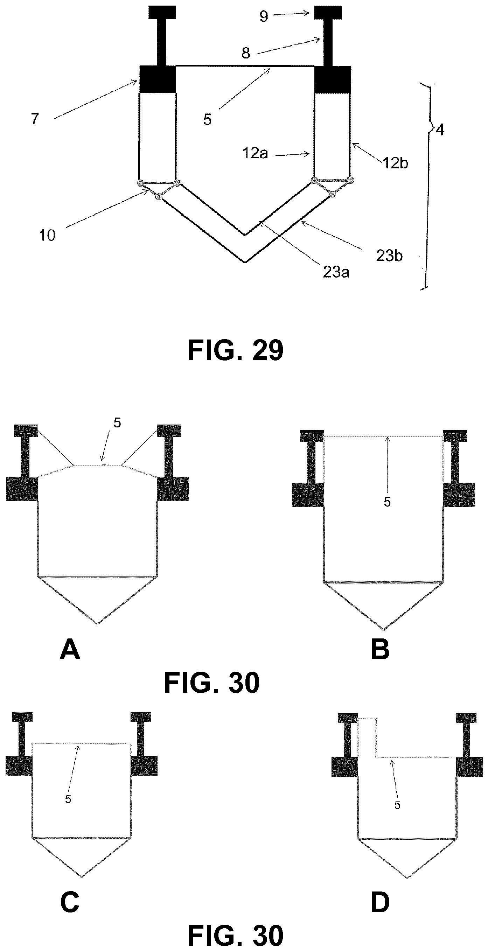

Fig. 29 shows an embodiment with double barrier nets. The net cage (4) comprises double vertical nets (12a, 12b) and a double net bottom (23a, 23b). A bottom ring (10) is situated between the inner and outer nets (12a, 12b, 23a, 23b) to act as a spacer between the nets.

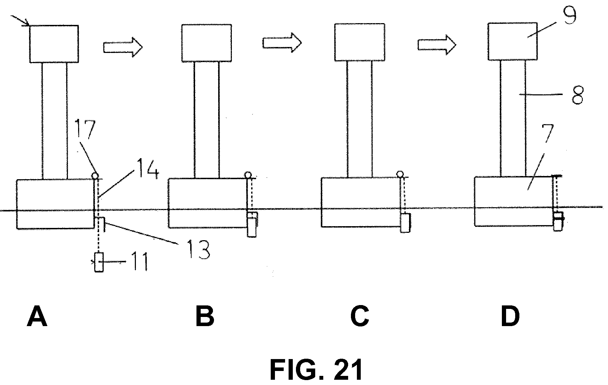

Fig. 19 shows a cross section of the floating collar (2) with upper buoyancy member (9), lower buoyancy member (7) and columns (8) and Fig. 21 shows an embodiment of suspending the net cage (3) to the lower buoyancy member (7). The lower buoyancy member (7) is provided with a suspension means (13) for suspending the net cage (3) from the lower buoyancy member (7). The suspension means (13) can be provided on the vertical side or the underside of the lower buoyancy member (7). It is also conceivable that the suspension means (13) can be provided higher up on the inner sidewall of the lower buoyancy member (7) and in some cases even on the vertical sides of the columns (8). Further, some parts of the net cage (3) can be suspended above the lower buoyancy member (7). The suspension means (13) are continuous along the circumference of the net cage (3) and the suspension means (13) can for instance be a groove or an element which makes it possible to attach the top ring (11) of the net cage (3) to the lower buoyancy member (7) (or the columns (8)). The suspension means (13) can further have excess dimensions on the inner and outer diameter in order for the top ring (11) of the net cage (3) to fit even if the top ring (11) has been somewhat deformed. Further, the suspension means (13) can be provided with inclined guide surfaces (not shown) in order to ease the joining of the top ring (11) and the suspension means (13).

Figs. 30 A-D show alternative embodiments of the placement of the fish repellant roof (5).

Figs. 21 A-D show schematically a possible method for joining the net cage (3) to the suspension means (13) on the lower buoyancy member (7).

Fig. 21 A shows schematically the start of the method for attaching the net cage (3) to the floating collar (2) where the top ring (11) of the net cage (3) is connected to one end of a tripping line (14) and which other end is connected to a winch (17) on the lower buoyancy member (7).

Fig. 21B shows the situation where the winch (17) has started to pull in the tripping line (14) and Fig. 21C shows the situation where the top ring (11) of the net cage (3) has been pulled into the suspension means (13). Fig. 21D shows the final situation where the top ring (11) has been locked into the suspension means (13) and the tripping line (14) has been locked or possibly removed.

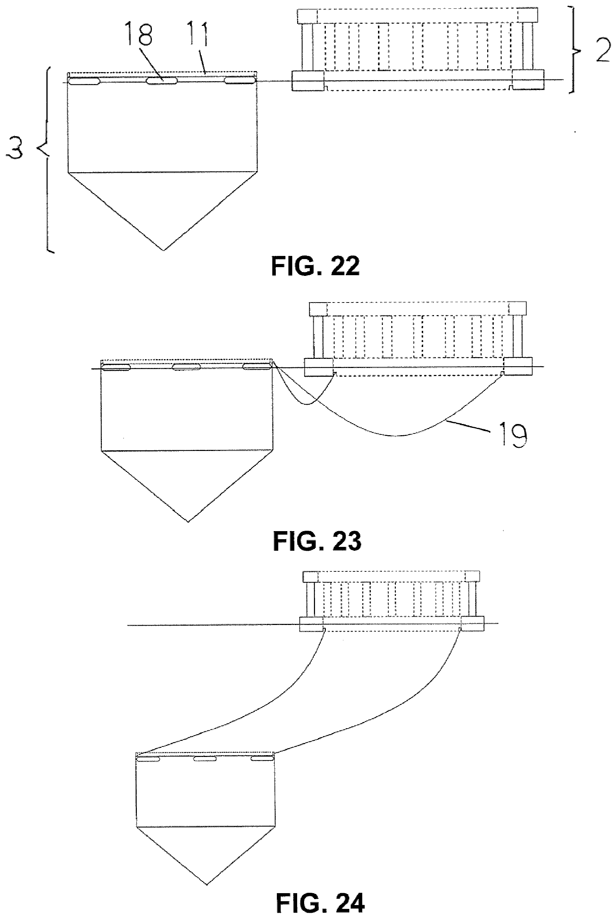

A method for installation of the net cage (3) to the floating collar (2) will now be described with reference to Figs. 22 to 27.

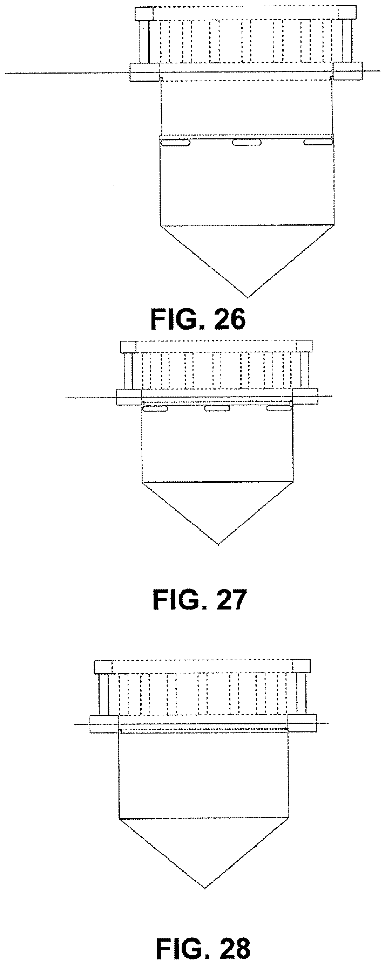

Before installation of the net cage (3) to the floating collar (2), the net cage (3) is provided with floating elements (18) on or below the top ring (11) in order to compensate for the weight in the bottom ring (not shown). This results in a positive buoyancy for this system. The assembled net cage (3) is transported to the floating collar (2). The horizontal position of the net cage (3) is controlled by a vessel (not shown) and pull-in lines (19) are connected between the net cage (3) and the floating collar (11) (fig. 23). The top ring (11) is given a slight negative buoyancy by reducing the buoyancy or increase the weight (Fig. 24). The pull-in lines (19) from the floating collar (2) and control lines (not shown) from the vessel are lowered until the net cage (2) has reached a sufficient depth to move beneath the mooring lines (not shown). When the net cage (3) has reached a sufficient depth, the surface vessel (not shown) is lowering the control lines until the net cage is suspended beneath the floating ring (2) and the tension in the control lines no longer have tension (Fig. 25). Winches (17) on the pull-in lines (19) are activated to pull the top ring (11) into the suspension means (13). Since the net cage (3) have only a slight negative buoyancy, powerful winches are not necessary to perform this operation. When the top ring (11) has been locked to the suspension means (13), the weight of the net cage (3) is transferred to the floating collar (2) by reducing the buoyancy of the floating elements (18) which thereafter are removed (Fig. 27).

In a preferred embodiment, the space between the upper and lower members (7, 9) and the columns (8) can be covered by a permanent or temporary dense or water permeable material in order to provide an additional barrier against escape in case of damage, imperfect closing of the roof net, etc. By using this kind of covering, the roof net (5) can also be removed or raised to above the operational position in order to "hand-feed" the fish at the time of deployment of fish.

Physostomous fish, such as salmon, need to have regular access to air in order to trim their swim bladder for buoyancy control and when the fish pen (1) is in a submerged position for longer periods, air has to be made available for the fish. Without access to air while submerged, it may be necessary to frequently surface net cage (typically on a weekly or bi-weekly basis) for swim bladder adjustment.

In order to overcome this problem, the fish pen (1) can be provided with one or more underwater air-filled domes (6) to supply air to the fish. (see Fig. 4).

The natural swimming pattern for caged fish (typically salmon) is typically to form an annular cylindrical shaped school, where the fish is swimming in a circular pattern. Exiting the school represents a danger for the fish in the wild, so it is not natural for the fish to exit the school to reach an air dome located at the center of the fish pen (1).

In one preferred embodiment of as shown in Figs. 1 and 4, the air-filled dome (6) is configured as inscribed in an annulus inside the cross-section of the fish repellent cage (3) to adapt to the natural behavior of the of the caged fish. The air-filled domes (6) may be continuous or divided into separate parts with mutual spacing.

Further, the air-filled domes (6) comprises supply lines for air (21), and may further be equipped with lights and feeding stations to attract the fish to the air-filled domes and to train the fish to use the domes. Other sensors and cameras may be installed in or in close to the domes to monitor the behavior of the fish.

As mentioned above, the air-filled domes (6) can be separated into multiple compartments in order to reduce free surface effects, which may impair the stability of the fish pen, and to reduce the amount of escaping air.

Further, the underwater air-filled domes (6) can be an integrated part of the floating collar (2), a removal part attached to the floating collar (2) or an integrated part of the roof net (5).

In a preferred embodiment, as shown in Fig. 4, the air filled dome (6) is connected to an air supply system consisting of compressor (20), elevated air intake (41) and air supply lines (21), to compensate for air escaping e.g. due to fish motions, environmental loads and floating collar motions. A control system consisting of control unit, valves and sensors is to regulate flow into the dome (6).

Fig. 4 further shows an example of feed transportation system, where tube (25) is passed through the lower buoyancy member (7) into the fish pen (1). In this embodiment, the tube (25) is J-shaped, but can have other adequate shape. Further, the tube (25) can be passed up through the column (8). Inside this tube (25), a feeding hose (24) supplying fish feed from a fish feed supply (not shown) can be provided. However, this tube (25) can also be used for other purposes such as wiring for lights, sensors, dead fish pump etc. Several of the columns (8) can be provided with such tubes (25). In one embodiment of the invention, the columns (8) comprising the tubes (25) are not in flow connection with the lower buoyancy member (7).

The fish inside the fish pen must be gathered to be able to extract fish for e.g. slaughtering or delousing in a process called crowding. In one embodiment of the system according to the invention, as shown in Fig. 2, a bottom lifting ring (26) with a double bottom net (44) is temporarily or permanently installed inside the fish repellent closing net (4) and is pulled towards the surface using winches and wires for crowding. The outside diameter of the bottom lifting ring (26) is the similar or slightly larger than the inside diameter of the fish repellent net (4), in order to form a closing between the bottom lifting ring (26) and the fish repellent net (4) during crowding, preventing fish to escape to the underside of the bottom ring and the double bottom net (44). The bottom lifting ring (26) can be made from rigid, flexible or inflatable material and the bottom ring surface is smooth and without extremities to avoid damage to the fish cage. When the fish extraction is complete, the bottom lifting ring (26) with double bottom net (44) can be removed from the fish pen or lowered back to the bottom of the fish repellent net (4).

Further, preferred embodiments of the system according to present invention can comprise one or more of the following systems:
- Fish pen control and automation system
- Power generation, energy storage and distribution system (e.g. battery and/or generator)
- Floating collar ballast and de-ballast system
- Fish feeding system - storage and distribution
- Dead fish removal and handling system - dead fish pick up system, dead fish grinder, ensilage system and ensilage storage
- Underwater air dome system including air intake, compressor, air hoses, valves, sensors and control.
- Artificial lighting
- Cameras
- Environmental sensors (current, PH, temperature, O2, salinity, etc.)
- Biomass sensors
- Sea lice detection and counting systems
- Inspection ROV or light work ROV
- Net cleaning robot
- Communication system; through cable, WIFI, mobile network, radio link etc. allowing the fish pen (1) to be partly or completely semi-automated and/or remotely operated. In one embodiment, the fish pen is self-sustained and with sufficient systems and storage capacity to operate for weeks without people accessing the fish pen.

In another embodiment of the system according to the invention, the system only comprises the lower buoyancy member (7). However, in this embodiment, this lower buoyancy member (7) has a considerable height, such as 10-15 meters. This embodiment might not have a favorable/optimal response to environmental loads, but it can especially be used for sheltered locations.

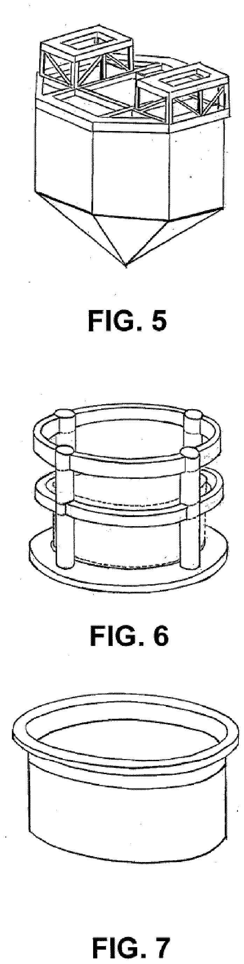

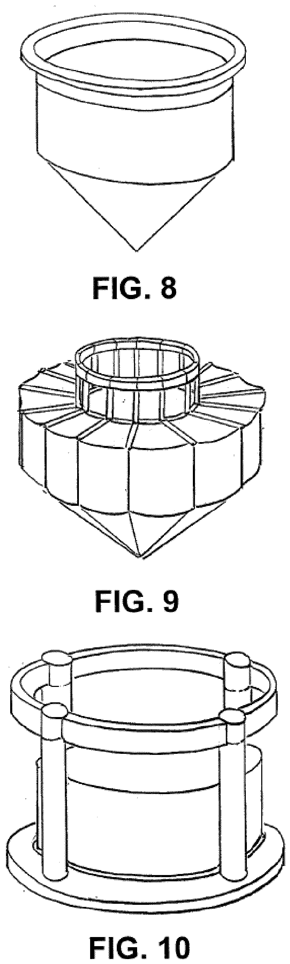

Figs. 5-14 show further embodiments of the inventive concept.

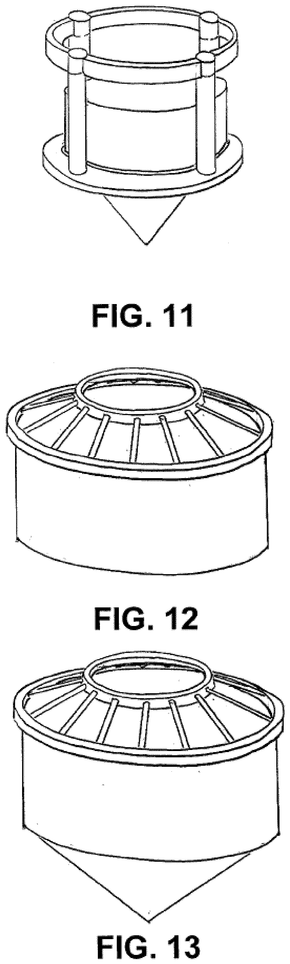

In two embodiments of the system according to the invention, as shown in Figs. 13 and 14, the center diameter of the upper buoyancy member (9) is significantly smaller than the center diameter of the lower buoyancy member (7). The upper and lower buoyancy member may be connected by inclined columns or there may be outward pointing radial trusses as part of the lower buoyancy member.

In another embodiment of the system according to the invention, the lower buoyancy member (7) and/or the upper buoyancy member (9) are fitted with horizontal and/or diagonal bracings going from the buoyancy member(s) (7, 9) towards the center of the fish pen (1).

In yet another embodiment of the system according to the invention, the lower buoyancy member (7) is extended towards the bottom of the net cage (3), to provide horizontal and vertical stabilization of the net cage. The deep part of the lower buoyancy member can be shaped as columns and pontoon or as truss work.

In another embodiment of the system according to the invention, as shown in Fig. 5, the upper buoyancy member (9) is consisting of two or more surface piercing structures not forming a continuous structure surrounding the center of the fish pen.

The construction of the fish pen (1) is so robust and strong that it is possible to utilize a direct-coupled mooring system (22) (see Figs. 1 and 2) and it is not necessary to use a frame mooring, such as used for conventional systems with flexible plastic rings. This involves that each individual fish pen (1) can move independent of each other, if more fish pens (1) are placed in the same area, and the distance between each fish pen can be larger for increased safety and improved water quality.

The mooring lines (22) can be made up by segments with chains, wires and fiber ropes. The assembly of mooring lines can be made such that there is a chain in the upper part where the mooring lines may get in contact with the lower buoyancy member (7) and fiber ropes in the part that may get in contact with the net cage (3), in order to prevent gnawing/abrasion of fiber rope against steel in the lower buoyancy member (7) or between chain and net cage (3). The lowest part of the mooring line close to the seabed consists of chain.

The mooring lines can be attached to brackets or chain stoppers on the lower buoyancy member (7). Alternatively they can be attached to the columns (8) between the upper (9) and lower (7) buoyancy members. In-line chain stoppers can be used for tensioning the mooring lines.

Further, the mooring lines can be grouped in for example 3 to 4 groups, which will result in sectors that can accommodate a vessel for loading/unloading or for replacing and mounting the net cage (3).

## Claims

1. A semi-submersible fish-farming system, such as a fish pen (1), which can be located in at least two different semi-submerged positions, a first position (15) and a second position (16), by ballasting and de-ballasting, the system comprises a floating collar (2) comprising a ring-shaped or polygonal lower buoyancy member (7), a ring-shaped or polygonal upper buoyancy member (9), a plurality of columns (8) connecting the ring shaped or polygonal members (7, 9) together, said system further comprises a net cage (3) suspended from the lower buoyancy member (7) or the colums (8), said lower buoyancy member (7) is a continuous, closed pontoon encircling the center of the fish pen, said net cage (3) comprises a fish repellent closing net and a fish repellent net roof (5), said net roof (5) closing off the top of the net cage (3), and that said upper member (9) being buoyant,
said system (1) is further movable towards the first position (15) by moving water out of the lower buoyancy member (7) to bring said lower buoyancy member (7) to the water surface, where the lower buoyant member (7) is floating on the water surface so that the net roof (5) is above the water surface and where the columns (8) and the upper buoyancy member (9) is located above the water surface; and towards the second position (16), by moving water into the interior of the lower buoyancy member (7) and/or into at least a parts of the columns (8), where the lower buoyancy member (7) and all the major parts or all the extension of the columns (8) are submerged below the water surface until the water line is at the upper part of the columns (8) or until the upper buoyancy member (9) is floating on the water surface, where the fish repellent net roof (5) is kept at a certain depth to avoid or reducing the exposure to sea lice, jellyfish an algae.

2. The semi-submersible fish-farming system according to claim 1, **characterised in that** the upper buoyancy member (9) is fully or partly filled with air or foam.

3. The semi-submersible fish-farming system according to any one of the claims 1-2, **characterised in that** net cage (3) is attached to the inner perimeter of the lower buoyancy member (7).

4. The semi-submersible fish-farming system according to any of the preceding claims, **characterised in that** it comprises at least one tube (25) extending from the upper buoyancy member (9) through at least one column (8) and the lower buoyancy member (7), through which tube (25) hoses (24) electrical cables etc. is passed into the net cage (3).

5. Semi-submersible fish-farming system according to any one of the claims 1-4, **characterised in that** the fish pen (1) can be provided with one or more underwater air-filled domes (6) to supply air to the fish.

6. The semi-submersible fish-farming system according to claim 5, **characterised in that** the air- filled domes (6) is an integrated part of the floating collar or a removal part attached to the floating collar (2), said air-filled domes (6) is arranged in an annulus inside the cross-section of the fish repellent cage (3) for adapting to the natural behavior of the caged fish and said air-filled domes (6) further comprises supply lines (21) for air.

7. The semi-submersible fish-farming system according to any one of claim 5-6, **characterised in that** the air-filled domes (6) further comprises lights and feeding stations to attract the fish to the air-filled domes (6).

8. The semi-submersible fish-farming system according to any one of claim 5-7, **characterised in that** the fish pen (1) comprises other sensors and cameras installed in or close to the air- filled domes (6) to monitor the behaviour of the fish.

9. Semi-submersible fish-farming system according to claim 1, **characterised in that** it comprises one or more of the following systems:
• fish pen control and automation system;
• power generation, energy storage and distribution system (e.g. battery and/or generator);
• floating collar ballast and de-ballast system;
• fish feeding system - storage and distribution;
• dead fish removal and handling system - dead fish pick up system, dead fish grinder, ensilage system and ensilage storage;
• underwater air dome system including air intake, compressor, air hoses, valves, sensors and control;
• artificial lighting;
• cameras;
• environmental sensors (current, PH, temperature, O2, salinity, etc.);
• biomass sensors;
• sea lice detection and counting systems;
• inspection ROV or light work ROV;
• net cleaning robot;
• communication system; through cable, WIFI, mobile network, radio link etc.

10. Semi-submersible fish-farming system according to any one of the preceding claims, **characterized in that** the net cage (3) is connected to the lower buoyancy member (7) at the position of the top of the fish pen.

11. Semi-submersible fish-farming system according to any one of the preceding claims, **characterized in that** the net cage (3) around the upper circumference of the fish repellant closing net (4), is provided with a top ring (11), and said lower buoyancy member (7) on its sides or bottom, is provided with a suspension means (13) said top ring (11) and suspension means (13) have complementary design which allows the top ring (11) to be attached to the suspension means (13), and the load from the net cage (3) can be transferred to the suspension means (13).

## Patentansprüche

1. Überflutbares System zur Fischzucht, wie z. B. ein Fischgehege (1), das durch Ballastierung und Entballastierung in mindestens zwei verschiedenen überflutbaren Positionen, einer ersten Position (15) und einer zweiten Position (16), angeordnet werden kann,
wobei das System einen Schwimmkragen (2) umfasst, der ein ringförmiges oder mehreckiges unteres Auftriebselement (7), ein ringförmiges oder mehreckiges oberes Auftriebselement (9), und eine Vielzahl von Säulen (8), die die ringförmigen oder mehreckigen Elemente (7, 9) miteinander verbinden, umfasst,
wobei das System ferner einen Netzkäfig (3) umfasst, der an dem unteren Auftriebselement (7) oder den Säulen (8) aufgehängt ist, wobei das untere Auftriebselement (7) ein durchgehender, geschlossener Ponton ist, der die Mitte des Fischgeheges umgibt, wobei der Netzkäfig (3) ein fischabweisendes Verschlussnetz und ein fischabweisendes Netzdach (5) umfasst, wobei das Netzdach (5) die Oberseite des Netzkäfigs (3) abschließt, und wobei das obere Element (9) schwimmfähig ist,
wobei das System (1) weiter in Richtung auf die erste Position (15) bewegbar ist, indem Wasser aus dem unteren Auftriebselement (7) herausbewegt wird, um das untere Auftriebselement (7) an die Wasseroberfläche zu bringen, wobei das untere Auftriebselement (7) auf der Wasseroberfläche schwimmt, so dass das Netzdach (5) über der Wasseroberfläche liegt, und wobei die Säulen (8) und das obere Auftriebselement (9) über der Wasseroberfläche angeordnet sind; und in Richtung der zweiten Position (16) bewegbar ist, indem Wasser in das Innere des unteren Auftriebselements (7) und/oder in mindestens einen Teil der Säulen (8) bewegt wird, wobei das untere Auftriebselement (7) und alle größeren Teile oder die gesamte Ausdehnung der Säulen (8) unter die Wasseroberfläche eingetaucht sind, bis die Wasserlinie am oberen Teil der Säulen (8) liegt oder bis das obere Auftriebselement (9) auf der Wasseroberfläche schwimmt, wobei das fischabweisende Netzdach (5) bei einer bestimmten Tiefe gehalten wird, um die Exposition gegenüber Seeläusen, Quallen und Algen zu vermeiden oder zu verringern.

2. Überflutbares System zur Fischzucht nach Anspruch 1,
**dadurch gekennzeichnet, dass** das obere Auftriebselement (9) ganz oder teilweise mit Luft oder Schaumstoff gefüllt ist.

3. Überflutbares System zur Fischzucht nach einem der Ansprüche 1 bis 2,
**dadurch gekennzeichnet, dass** der Netzkäfig (3) am inneren Umfang des unteren Auftriebselements (7) befestigt ist.

4. Überflutbares System zur Fischzucht nach einem der vorangehenden Ansprüche,
**dadurch gekennzeichnet, dass** es mindestens ein Rohr (25) umfasst, das sich von dem oberen Auftriebselement (9) durch mindestens eine Säule (8) und das untere Auftriebselement (7) erstreckt, durch welches Rohr (25) Schläuche (24), elektrische Kabel usw. in den Netzkäfig (3) geführt sind.

5. Überflutbares System zur Fischzucht nach einem der Ansprüche 1-4, **dadurch gekennzeichnet, dass** das Fischgehege (1) mit einer oder mehreren luftgefüllten Unterwasserkuppeln (6) bereitgestellt werden kann, um den Fischen Luft zuzuführen.

6. Überflutbares System zur Fischzucht nach Anspruch 5,
**dadurch gekennzeichnet, dass** die luftgefüllten Kuppeln (6) ein integrierter Teil des Schwimmkragens oder ein an dem Schwimmkragen (2) befestigter abnehmbarer Teil ist, wobei die luftgefüllten Kuppeln (6) in einem Ring innerhalb des Querschnitts des fischabweisenden Käfigs (3) angeordnet sind, um sich an das natürliche Verhalten der gefangenen Fische anzupassen, und die luftgefüllten Kuppeln (6) ferner Versorgungsleitungen (21) für Luft umfassen.

7. Überflutbares System zur Fischzucht nach einem der Ansprüche 5-6,
**dadurch gekennzeichnet, dass** die luftgefüllten Kuppeln (6) ferner Lichter und Fütterungsstationen umfassen, um die Fische zu den luftgefüllten Kuppeln (6) zu locken.

8. Überflutbares System zur Fischzucht nach einem der Ansprüche 5-7, **dadurch gekennzeichnet, dass** die Fischgehege (1) andere Sensoren und Kameras umfasst, die in oder in der Nähe der luftgefüllten Kuppeln (6) aufgestellt sind, um das Verhalten der Fische zu überwachen.

9. Überflutbares System zur Fischzucht nach Anspruch 1,
**dadurch gekennzeichnet, dass** es eines oder mehrere der folgenden Systeme umfasst:
- Fischgehege-Steuerungs- und -Automatisierungssystem;
- Energieerzeugungs-, Speicherungs- und Verteilungssystem (z.B. Batterie und/oder Generator);
- Schwimmkragen-Ballastierungs- und Entballastierungssystem;
- Fischfütterungssystem - Lagerung und Verteilung;
- Fischkadaver-Entfernungs- und Handhabungssystem - Fischkadaver-Sammelsystem, Fischkadavermühle, Ensilagesystem und Ensilagelagerung;
- Unterwasser-Luftkuppel-System einschließlich Lufteinlass, Kompressor, Luftschläuche, Ventile, Sensoren und Steuerung;
- künstliche Beleuchtung;
- Kameras;
- Umweltsensoren (Strom, pH-Wert, Temperatur, O₂, Salzgehalt usw.);
- Biomassesensoren;
- Systeme zur Erkennung und Zählung von Seeläusen;
- Inspektions-ROV (remotely operated vehicle - ferngesteuertes Fahrzeug) oder Light Work-Class ROV;
- Netzreinigungsroboter;
- Kommunikationssystem; über Kabel, WIFI, Mobilfunknetz, Funkverbindung usw.

10. Überflutbares System zur Fischzucht nach einem der vorangehenden Ansprüche,
**dadurch gekennzeichnet, dass** der Netzkäfig (3) mit dem unteren Auftriebselement (7) an der Position der Oberseite der Fischgehege verbunden ist.

11. Überflutbares System zur Fischzucht nach einem der vorangehenden Ansprüche,
**dadurch gekennzeichnet, dass** der Netzkäfig (3) um den oberen Umfang des fischabweisenden Verschlussnetzes (4) herum mit einem oberen Ring (11) und dem unteren Auftriebselement (7) an seinen Seiten oder seinem Boden bereitgestellt ist, mit einem Aufhängemittel (13) bereitgestellt ist, wobei der obere Ring (11) und das Aufhängemittel (13) eine komplementäre Konstruktion aufweisen, die es ermöglicht, den oberen Ring (11) an dem Aufhängemittel (13) zu befestigen, wobei die Last von dem Netzkäfig (3) auf das Aufhängemittel (13) übertragen werden kann.

## Revendications

1. Système de pisciculture semi-submersible, tel qu'un enclos à poissons (1), qui peut être situé dans au moins deux positions semi-immergées différentes, une première position (15) et une seconde position (16), par lestage et délestage, le système comprend un collier flottant (2) comprenant un élément de flottabilité inférieur polygonal ou en forme d'anneau (7), un élément de flottabilité supérieur polygonal ou en forme d'anneau (9), une pluralité de colonnes (8) reliant ensemble les éléments polygonaux ou en forme d'anneau (7, 9),
ledit système comprend en outre une cage à filet (3) suspendue depuis l'élément de flottabilité inférieur (7) ou les colonnes (8), ledit élément de flottabilité inférieur (7) est un ponton continu fermé encerclant le centre de l'enclos à poissons, ladite cage à filet (3) comprend un filet de fermeture répulsif anti-poissons et un toit de filet répulsif anti-poissons (5), ledit toit de filet (5) fermant le haut de la cage à filet (3), et ledit élément supérieur (9) est flottant,
ledit système (1) est en outre mobile vers la première position (15) en déplaçant de l'eau hors de l'élément de flottabilité inférieur (7) pour amener ledit élément de flottabilité inférieur (7) jusqu'à la surface d'eau, où l'élément de flottabilité inférieur (7) flotte sur la surface d'eau de sorte que le toit de filet (5) est au-dessus de la surface d'eau et où les colonnes (8) et l'élément de flottabilité supérieur (9) sont situés au-dessus de la surface d'eau ; et vers la seconde position (16), en déplaçant de l'eau dans l'intérieur de l'élément de flottabilité inférieur (7) et/ou dans au moins une partie des colonnes (8), où l'élément de flottabilité inférieur (7) et toutes les parties principales ou toute l'extension des colonnes (8) sont immergées sous la surface d'eau jusqu'à ce que la ligne d'eau soit au niveau de la partie supérieure des colonnes (8) ou jusqu'à ce que l'élément de flottabilité supérieur (9) flotte sur la surface d'eau, où le toit de filet répulsif anti-poissons (5) est maintenu à une certaine profondeur pour éviter ou réduire l'exposition aux poux de mer, aux méduses et aux algues.

2. Système de pisciculture semi-submersible selon la revendication 1, **caractérisé en ce que** l'élément de flottabilité supérieur (9) est entièrement ou partiellement rempli d'air ou de mousse.

3. Système de pisciculture semi-submersible selon l'une quelconque des revendications 1 à 2, **caractérisé en ce que** la cage à filet (3) est fixée au périmètre intérieur de l'élément de flottabilité inférieur (7).

4. Système de pisciculture semi-submersible selon l'une quelconque des revendications précédentes, **caractérisé en ce qu'**il comprend au moins un tube (25) s'étendant depuis l'élément de flottabilité supérieur (9) à travers au moins une colonne (8) et l'élément de flottabilité inférieur (7), à travers lequel tube (25), des tuyaux (24), des câbles électriques, etc. sont passés dans la cage à filet (3).

5. Système de pisciculture semi-submersible selon l'une quelconque des revendications 1 à 4, **caractérisé en ce que** l'enclos à poissons (1) peut être muni d'un ou plusieurs dômes sous-marins remplis d'air (6) pour fournir de l'air aux poissons.

6. Système de pisciculture semi-submersible selon la revendication 5, **caractérisé en ce que** les dômes remplis d'air (6) sont une partie intégrée du collier flottant ou une partie retirable fixée au collier flottant (2), lesdits dômes remplis d'air (6) sont disposés dans un anneau à l'intérieur de la section transversale de la cage répulsive anti-poissons (3) pour s'adapter au comportement naturel des poissons en cage et lesdits dômes remplis d'air (6) comprennent en outre des conduites d'alimentation (21) pour de l'air.

7. Système de pisciculture semi-submersible selon l'une quelconque des revendications 5 à 6, **caractérisé en ce que** les dômes remplis d'air (6) comprennent en outre des éclairages et des postes alimentaires pour attirer les poissons vers les dômes remplis d'air (6).

8. Système de pisciculture semi-submersible selon l'une quelconque des revendications 5 à 7, **caractérisé en ce que** l'enclos à poissons (1) comprend d'autres capteurs et dispositifs de prise de vue installés à l'intérieur ou à proximité des dômes remplis d'air (6) pour surveiller le comportement des poissons.

9. Système de pisciculture semi-submersible selon la revendication 1, **caractérisé en ce qu'**il comprend un ou plusieurs des systèmes suivants :
• système de commande et d'automatisation d'enclos à poissons ;
• système de génération de puissance, de stockage et de distribution d'énergie (par exemple batterie et/ou générateur) ;
• système de lestage et de délestage de collier flottant ;
• système alimentaire pour poissons - stockage et distribution ;
• système d'enlèvement et de manipulation de poissons morts - système de ramassage des poissons morts, broyeur de poissons morts, système d'ensilage et stockage d'ensilage ;
• système de dômes d'air sous-marin comprenant une admission d'air, un compresseur, des tuyaux d'air, des vannes, des capteurs et une commande ;
• éclairage artificiel ;
• dispositifs de prise de vue ;
• capteurs environnementaux (courant, pH, température, O₂, salinité, etc.) ;
• capteurs de biomasse ;
• systèmes de détection et de comptage de poux de mer ;
• ROV d'inspection ou ROV de travaux légers ;
• robot de nettoyage de filet ;
• système de communication; par câble, WIFI, réseau mobile, liaison radio, etc.

10. Système de pisciculture semi-submersible selon l'une quelconque des revendications précédentes, **caractérisé en ce que** la cage à filet (3) est reliée à l'élément de flottabilité inférieur (7) à la position du haut de l'enclos à poissons.

11. Système de pisciculture semi-submersible selon l'une quelconque des revendications précédentes, **caractérisé en ce que** la cage à filet (3) autour de la circonférence supérieure du filet de fermeture répulsif anti-poissons (4), est munie d'un anneau supérieur (11), et ledit élément de flottabilité inférieur (7) sur ses côtés ou son fond, est muni de moyens de suspension (13), ledit anneau supérieur (11) et les moyens de suspension (13) ont une conception complémentaire qui permet à l'anneau supérieur (11) d'être fixé aux moyens de suspension (13), et la charge de la cage à filet (3) peut être transférée aux moyens de suspension (13).
